# EUROPÄISCHE PATENTSCHRIFT

(11) **EP 2 438 009 B1**
(45) Veröffentlichungstag und Bekanntmachung des Hinweises auf die Patenterteilung: **21.08.2013**
(21) Anmeldenummer: 10722293.7
(22) Anmeldetag: 02.05.2010
(51) Int. Cl.: C01B 33/037

(54) **VERFAHREN ZUR AUFBEREITUNG VON SÄGEABFÄLLEN ZUR RÜCKGEWINNUNG VON SILIZIUM FÜR DIE HERSTELLUNG VON SOLARSILIZIUM**
METHOD FOR TREATING CUTTING WASTE FOR RECOVERING SILICON FOR THE PRODUCTION OF SOLAR SILICON
PROCÉDÉ DE TRAITEMENT DE DÉCHETS DE SCIAGE POUR LA RECYCLAGE DU SILICIUM AUX FINS DE PRODUCTION DE SILICIUM SOLAIRE

(30) Priorität: 04.05.2009 DE 102009020143
(43) Veröffentlichungstag der Anmeldung: 11.04.2012
(73) Patentinhaber: PV Silicon Forschungs und Produktions GmbH, 99099 Erfurt (DE)
(72) Erfinder: SCHULZE, Friedrich-Wilhelm, 38474 Tülau (DE); SCHAAFF, Friedrich, 06116 Halle/Saale (DE)
(74) Vertreter: Hoffmann, Heinz-Dietrich
(86) Internationale Anmeldenummer: PCT/DE2010/000513
(87) Internationale Veröffentlichungsnummer: WO 2010/127669

(56) Entgegenhaltungen:
- EP-A1- 1 586 537
- WO-A1-2008/133525
- WO-A1-2010/017231
- DE-A1- 2 807 951

## Beschreibung

Die Erfindung betrifft ein Verfahren zur Aufbereitung von Sägeabfällen zur Rückgewinnung von Solarsilizium für die Herstellung von Solarzellen

Polykristallines Silizium wird als Ausgangsmaterial von Silizium für Halbleiter und als Ausgangsmaterial von Solarzellen verwendet. Mit der zunehmend starken Verbreitung von Solarzellen ist auch der Bedarf für polykristallines Silizium, bei dem es sich um ein Ausgangsmaterial dafür handelt, angestiegen. Die ursprünglichen Ausgangsmaterialien für die Solar- und für die Halbleiterindustrie sind die gleichen. Allerdings muss das Silizium für die Mikrochips noch hundertmal reiner sein als für eine Solarzelle. Die Solarindustrie bezieht bisher ihr Silizium direkt oder indirekt über Abfälle, die auf dem Verarbeitungsweg zum Wafer entstehen, aus der Halbleiterindustrie.

Bis vor wenigen Jahren war der Stand derart, dass für die Versorgung der Solarindustrie mit Silizium die Abfälle aus der Halbleiterindustrie ausreichten. Durch das starke Wachstum der Solarindustrie flossen erhebliche Produktionsmengen an polykristallinem Silizium aus dem Siemensprozess direkt in die Solarindustrie. Trotzdem konnte der Bedarf nicht gedeckt werden, so dass das Wachstum durch mangelnde Silizium-Verfügbarkeit gedrosselt wurde und wird.

Zur Herstellung von Siliziumwafern werden die Siliziumblöcke (Ingots) mit Drahtsägen in Wafer mit einer durchschnittlichen Dicke von ca. 180 Mikrometern geschnitten. Da die Sägedrähte einen Durchmesser von ca. 120 Mikrometern aufweisen, werden je Wafer rund 150 Mikrometer Silizium zerrieben. Das bedeutet, dass ca. 45 % des teuren Ausgangsmaterials zerspant und in der Slurry davon geschwemmt werden. Und wenn mit dünner werdenden Wafern - derzeit sind bereits Scheiben mit nur noch rund 160 Mikrometern für die Serienfertigung vorgesehen - nicht auch die Schnittdicke proportional abnimmt, dann wird der Verlust logischerweise immer größer. Da eine wesentliche Verringerung des Durchmessers des Sägedrahtes kaum realistisch ist, wird nach Wegen gesucht, um den anfallenden Sägeabfall wieder zu verwenden. Auch die gestiegenen Siliziumpreise verstärken den Druck zur Rückgewinnung des Materials. Das zerspante Silizium fällt in der sogenannten Slurry an, einer Dispersion von Siliziumkarbid in Glykol. Zusammen mit dem Draht ermöglicht sie den Sägevorgang. Die Trennung des Siliziums von dem Siliziumkarbid erfolgt durch klassieren in einer Zentrifuge oder in Hydrozyklonen.

Ein derartiger Prozess wird beispielsweise in der WO 2006/137098 A1 beschrieben. Bei dem vorgestellten Verfahren werden die wieder verwendbaren Bestandteile der Slurry vollständig zurück gewonnen. Die Slurry ist nach dem Schneideprozess mit unerwünschten Bestandteilen, wie z. B. Silizium und Eisen, angereichert. Bei dem beschriebenen Verfahren wird in einer Anfangszentrifuge die Trennung des gebrauchten Schlamms in feste und flüssige Bestandteile durchgeführt. Eine Sortierung der festen Bestandteile, die die Schleifkörper (SiC-Körner) enthalten, erfolgt in einer Batterie von hintereinander angeordneten Hydrozyklonen oder Zentrifugen. Die Wiederaufbereitung und die Reinigung der Schleifkörper erfolgt in einem Multifunktionsapparat, der alle erforderlichen Prozesse in einem einzelnen Druckbehälter durchführt. Der Prozess ermöglicht die komplette Wiederverwendung der Schleifkörper in einer Sägesuspension zur Herstellung von Siliziumwafern.

Das Silizium fällt in Form von kleinen Partikeln von ca. 1 Mikrometer Größe an. Es ist stark verunreinigt mit Eisen vom Sägedraht und Siliziumkarbid. Deshalb wird es weit unter Wert z. B. in der Stahlindustrie eingesetzt.

Die Herstellung von Siliziumblöcken durch direktes Aufschmelzen der festen Bestandteile führt zu keinem befriedigenden Ergebnis, da der Verunreinigungspegel viel zu hoch ist, so dass dieses Material nicht für die Herstellung von Wafern für Solarzellen geeignet ist.

Ein Verfahren zur Verwendung der festen Bestandteile bei der Herstellung von Siliziumtetrachlorid in einem Wirbelschichtverfahren wird in der WO 2008133525 A1 beschrieben. Bei der beschriebenen Lösung wird metallurgisches Silizium in einem Wirbelschichtofen unter Zusatz von Chlor zu Siliziumtetrachlorid umgewandelt. Diesem Prozess werden feste Bestandteile von Sägeabfällen mit unterschiedlichen Feinheitsgraden (Späne oder Staub) an verschiedenen Stellen des Reaktionsgefäßes in geringen Mengen dem metallurgischen Silizium zugesetzt. Somit werden auch die festen Bestandteile der Sägeabfälle bei der Herstellung von Siliziumtetrachlorid wieder verwendet. Das Siliziumtetrachlorid kann in weiteren Schritten entweder direkt zu Silizium reduziert werden oder in Trichlorsilan umgewandelt werden, das dann wiederum beispielsweise in einem üblichen Siemensprozess als reines Silizium abgeschieden wird.

Die DE 10118483 A1 beschreibt ein kontinuierliches Verfahren zur Direktsynthese von Silanen durch Umsetzung von feinteiligem Siliziummetall in Wirbelschicht, wobei aus der Wirbelschicht ein Produktstrom ausgebracht wird, der gasförmige Silane weitere gasförmige Reaktionsprodukte, nicht umgesetzte Chlorverbindungen und Silizium enthaltenden Staub enthält, bei dem mindestens ein Teil des Staubs in Form einer Suspension in einer Flüssigkeit, die ausgewählt wird aus flüssigen Silanen, weiteren flüssigen Reaktionsprodukten und deren Gemischen, in die Wirbelschicht eingebracht wird. Die bei dem Verfahren entstehenden feinteiligen Stäube, die mit dem Reaktionsprodukt ausgetragen werden und Silizium enthalten, sollen wieder wirksam genutzt werden können. Die Korngröße des Staubs beträgt dabei vorzugsweise höchstens 30 Mikrometer.

Beiden vorgenannten Verfahren haftet der Nachteil an, dass feine siliziumhaltige Stäube nur in geringen Mengen den eigentlichen Umwandlungsprozessen zugesetzt werden. In dem einen Fall werden die feien Staubpartikel in Suspensionen gebunden und im anderen Fall in aufwändigen Zuführeinrichtungen dosiert und dann dem Prozess zugeführt.

In der EP 1 586 537 A1 wird ein Verfahren zur Herstellung von Trichlormonosilan beschrieben, bei dem Siliziumpartikel mit Chlorwasserstoff in einem Fließbettreaktor umgesetzt werden. Dabei bestehen die Siliziumpartikel aus einem Siliziumstaub, der als Abfallprodukt bei der Herstellung von definierten Siliziumkörnungen aus stückigem Silizium anfällt. Der Siliziumstaub, der eine maximale Korngröße von 80 Mikrometern aufweist wird direkt in den Reaktor eingeschleust. Der Nachteil dieser Lösung besteht darin, dass die Reaktionsprodukte verunreinigt sind und über aufwändige Verfahrensschritte zu Solarsilizium aufbereitet werden müssen.

Die Aufgabe der vorliegenden Erfindung besteht darin, ein Verfahren anzugeben mit dem in einem kontinuierlichen Prozess die siliziumhaltigen festen Bestandteile der beim Drahtsägen von Siliziumwafern anfallenden Abfälle nahezu rückstandsfrei in wieder verwendbare Wertstoffe umgewandelt werden, die direkt bei der Herstellung von Silizium für Wafer eingesetzt werden können.

Das erfindungsgemäße Verfahren ist gekennzeichnet durch die Merkmale des Patentanspruchs 1. Mit diesem Verfahren sollen primär aus den festen Sägeabfällen der Waferherstellung in einem eigenständigen und kontinuierlichen Prozess wieder Ausgangsstoffe für die Siliziumabscheidung, beispielsweise in einem Siemens-Prozess, gewonnen werden. Die festen Bestandteile der Sägeabfälle weisen vorwiegend Silizium, das beim Sägen zerspant wird, Siliziumcarbid, das als abrasiv wirkender Hartstoff in der Sägesuspension verwendet wird und Eisen, das vom Sägedraht abgerieben wird, auf. Die Siliziumanteile, die sich in diesen festen Bestandteilen der Sägeabfälle befinden, weisen die geforderte Reinheit auf, da sie direkt bei der Waferproduktion anfallen. Diese festen Bestandteile, die bereits von den flüssigen Bestandteilen getrennt sind, werden in einem vorgelagerten Prozess vorzugsweise zu einer festen Trockenmasse kompaktiert, die zu Granulat geeigneter Größe geformt wird.

In einem ersten möglichen Verfahren, dem Wirbelschichtverfahren, wird das Granulat, was eine Korngröße von etwa einigen hundert Mikrometern aufweist, wird in das Reaktionsgefäß eingeblasen. Das Granulat wird dort auf eine Temperatur von ca. 350 °C aufgeheizt und von unten wird Chlorwasserstoff durch die Wirbelschicht geblasen. Dabei entstehen neben Trichlorsilan auch große Mengen an Siliziumtetrachlorid sowie Wasserstoff. Der Wasserstoff kann leicht aus dem Reaktionsgas herausgelöst werden. Das aus der Chlorieranlage freiwerdende Gasgemisch aus Siliziumtetrachlorid und Trichlorsilan wird in einer Anlage durch fraktionierte Destillation in seine Bestandteile aufgeteilt.

Ein zweites bevorzugtes Verfahren zur Rückgewinnung von Silanen wird im Schachtofen durchgeführt. Hierbei wird das Granulat, was eine Korngröße von einigen Millimetern bis einigen Zentimetern aufweist, auf einem Rost aufgeschüttet. Das Granulat wird dann auf eine Temperatur von 650 °C aufgeheizt und von unten wird Chlorwasserstoff durch die Schüttung geblasen. Dabei entstehen, wie auch beim Wirbelschichtverfahren neben Trichlorsilan auch große Mengen an Siliziumtetrachlorid sowie Wasserstoff. Die weitere Verarbeitung der Reaktionsgase erfolgt analog zum zuvor genannten Wirbelschichtverfahren.

Die weitere Verarbeitung des Siliziumtetrachlorids und des Trichlorsilan zu Silizium erfolgt mit Verfahren nach dem bekannten Stand der Technik. Das Trichlorsilan kann beispielsweise in einem Siemens-Prozess unter Einwirkung von Wasserstoff zu reinem Silizium und HCl umgewandelt werden. Das Siliziumtetrachlorid wird in Trichlorsilan umgewandelt.

Als festes Endprodukt des Verfahrens fällt SiC an, das im Prozess nicht chemisch umgewandelt wird und quasi als "Asche" durch die Roste fällt und unten aus dem Reaktionsgefäß entnommen werden kann. Das anfallende, sehr feinteilige SiC kann z.B. in der Keramikindustrie eingesetzt werden.

Der in dem Granulat befindliche Eisenanteil wird im Prozess durch das HCl in Eisenchlorid umgewandelt, das gasförmig entweicht und nach Kondensation leicht von den anderen Reaktionsgasen getrennt werden kann.

Die Vorteile des erfindungsgemäßen Verfahrens bestehen insbesondere darin, dass die festen Bestandteile der Sägeabfälle, die in großen Mengen anfallen, in einem eigenständigen Prozess wieder zu Grundstoffen der Siliziumherstellung umgewandelt werden und dass die gewonnenen Chlorsilane direkt und ohne aufwändige Reinigungsprozesse in reines Silizium umgewandelt werden können. Insbesondere entfällt das aufwändige Entfernen der dotierenden Stoffe wie Bor, Phosphor, Arsen, Antimon wie sie sonst bei der Siliziumherstellung stets enthalten sind.

Durch das erfindungsgemäße Verfahren wird der Kreislauf des Siliziums bei der Solarherstellung geschlossen. Die bei der Waferherstellung anfallenden ca. 50% Siliziumabfall werden durch das vorliegende Verfahren wieder völlig in den Prozess zurückgeführt. Das so wieder gewonnene Silizium weist die gleiche Reinheit auf, die der Siliziumblock beim Sägen der Wafer hatte.

Die beiden erwähnten erfindungsgemäße Verfahren werden nachfolgend an Hand von Ausführungsbeispiele näher beschrieben.

Verbrauchte Sägeslurry, die ca. 6-8 Gew.% Silizium enthält, wird nach dem so genannten "SIC-Prozess" - Verfahren, wie es beispielsweise in der WO 2006/137098 A1 beschrieben ist, in seine Bestandteile Glykol, wiederwendbares Siliziumkarbid und die das Silizium enthaltenden Feinteile aufgetrennt. Die Feinteile fallen dabei als feuchter Filterkuchen an. Dieser Filterkuchen wird entsprechend der benötigten Korngröße zerteilt und auf einem Granulierteller zu Kugeln geformt. Nach Trocknung erhält man ein stabiles Granulat, das beispielsweise mit einer bevorzugten Korngröße von einigen hundert Mikrometern in einem Wirbelschichtofen, wie zuvor beschrieben, nach einem üblichen Wirbelschichtverfahren zu Trichlorsilan und Siliziumtetrachlorid sowie Wasserstoff und Eisenchlorid umgewandelt. Die Reaktionsgase werden am Kopf des Reaktionsgefäßes herausgeführt und mit Verfahren nach dem Stand der Technik separiert. Das vom Granulat übrig gebliebene Siliziumchlorid wird am Fuß des Reaktionsgefäßes entnommen.

Soll das Granulat zur Umwandlung in Chlorsilane einem Schachtofen zugeführt werden, beträgt die Korngröße des Granulats vorzugsweise einige Millimeter bis einige Zentimeter. Das Granulat wird dazu auf dem Rost mit einer aufgeschichtet, während von unten durch den Rost der Chlorwasserstoff durch die Granulatschüttung geblasen wird. Während die Reaktionsgase wieder am Kopf des Reaktionsgefäßes herausgeführt werden, fällt das übrig gebliebene Siliziumchlorid durch den Rost nach unten. Um den Prozess kontinuierlich zu führen wird entsprechend Granulat nachchargiert.

## Patentansprüche

1. Verfahren zur Aufbereitung von Sägeabfällen zur Rückgewinnung von Silizium für die Herstellung von Solarsilizium für Solarzellen bei dem die festen siliziumhaltigen Sägeabfälle aus der Waferherstellung in einem Reaktionsgefäß mit HCl in Trichlorsilan und Siliziumtetrachlorid umgewandelt und die Eisenbestandteile der Sägeabfälle in Eisenchlorid umgewandelt werden, während sich die enthaltenen SiC-Anteile unverändert im unteren Teil des Reaktionsgefäßes als Staub ansammeln.
**dadurch gekennzeichnet, dass**
ausschließlich die festen siliziumhaltigen Sägeabfälle, deren Siliziumanteil bereits in der geforderten Reinheit vorliegt, in einem eigenständigen kontinuierlichen Prozess in Trichlorsilan und Siliziumtetrachlorid umgewandelt werden, indem die festen siliziumhaltigen Sägeabfälle zu einer festen trockenen Masse kompaktiert und zu Granulat mit der gewünschten Größe verarbeitet werden, die als Ausgangsstoff entweder im Wirbelschichtverfahren in einen Wirbelschichtofen eingebracht werden, wobei die Korngröße des Granulats in einem Bereich von einigen hundert Mikrometern liegt und der Umwandlungsprozess unter Einwirkung von HCl bei Temperaturen von ca. 350 °C erfolgt, oder das Granulat, dessen Korngröße in einem Bereich von einigen Millimetern bis einigen Zentimetern liegt, in einen Schachtofen eingebracht wird und der Umwandlungsprozess unter Einwirkung von HCl bei Temperaturen von 650 °C stattfindet.

2. Verfahren nach Anspruch 1
**dadurch gekennzeichnet, dass**
der festen trockenen Masse ein anorganisches Bindemittel zugesetzt wird um ein stabileres Granulat zu erhalten.

3. Verfahren nach Anspruch 1
**dadurch gekennzeichnet, dass**
die in dem Reaktionsgefäß entstehenden Reaktionsgase Trichlorsilan und Siliziumtetrachlorid in nachfolgenden Destillationsschritten getrennt und dem Silizium-Herstellungsprozess wieder zugeführt werden.

4. Verfahren nach Anspruch 1
**dadurch gekennzeichnet, dass**
das in dem Reaktionsgefäß entstehende Eisenchlorid in einem Kondensationsgefäß aus den Reaktionsgasen herausgelöst wird.

5. Verfahren nach Anspruch 1
**dadurch gekennzeichnet, dass**
das sich am Boden des Reaktionsgefäßes ansammelnde SiC als fester Rückstand entnommen und je nach Korngröße unterschiedlichen Verwendungen zugeführt wird.

## Claims

1. A method for treating cutting waste for the recovery of silicon for the production of solar silicon for solar cells, in which the solid, silicon-bearing cutting waste from wafer production is converted with HCl in a reaction vessel into trichlorosilane and silicon tetrachloride and the ferrous components of the cutting waste are converted into ferric chloride, while the SiC portions contained accumulate unchanged in the lower part of the reaction vessel as dust,
**characterized in that**
only the solid, silicon-bearing cutting waste, the silicon fraction of which already exists in the required purity, is converted into trichlorosilane and silicon tetrachloride in a self-contained, continuous process, **in that** the solid, silicon-bearing cutting waste is compacted into a solid dry mass and processed into granulate of the desired size, which is introduced as a raw material either in the fluidized bed process in a fluidized bed furnace, wherein the particle size of the granulate falls within a range of a few hundred micrometres and the conversion process takes place under the influence of HCl at temperatures of approximately 350 °C, or the granulate, the particle size of which falls within a range of a few millimetres to a few centimetres, is introduced into a shaft furnace and the conversion process takes place under the influence of HCl at temperatures of 650 °C.

2. The method according to claim 1
**characterized in that**
an inorganic binding agent is added to the solid, dry mass, in order to obtain a more stable granulate.

3. The method according to claim 1
**characterized in that**
the reaction gases trichlorosilane and silicon tetrachloride occurring in the reaction vessel are separated in subsequent distillation steps and returned to the silicon production process.

4. The method according to claim 1,
**characterized in that**
the ferric chloride occurring in the reaction vessel is dissolved out of the reaction gases in a condensation vessel.

5. The method according to claim 1,
**characterized in that**
the SiC accumulating on the floor of the reaction vessel is removed as a solid residue and assigned to different uses, depending on the particle size.

## Revendications

1. Procédé de traitement de déchets de sciage pour le recyclage de silicium aux fins de production de silicium solaire pour des cellules solaires, lors duquel on transforme dans un réacteur les déchets de sciage solides contenant du silicium issus de la production de tranches de silicium avec du HCl en trichlorosilane et en tétrachlorure de silicium et on transforme les composants ferreux des déchets de sciage en chlorure de fer, alors que les parts de SiC contenues s'accumulent à l'état inchangé dans la parties inférieure du réacteur sous forme de poussière,
**caractérisé en ce**
**que**, lors d'un processus indépendant continu, on transforme exclusivement les déchets de sciage solides contenant du silicium dont la part en silicium est déjà présente avec la pureté requise en trichlorosilane et en tétrachlorure de silicium, en ce qu'on compacte les déchets de sciage solides contenant du silicium en une masse sèche solide et on les façonne en granulés de la taille souhaitée que l'on introduit en tant que produit de départ soit par procédé par lit fluidisé dans un four à lit fluidisé, la grosseur de grains des granulés étant de l'ordre de quelques centaines de micromètres et le processus de transformation s'effectuant sous l'effet de HCl à des températures d'environ 350 °C ou on introduit les granulés dont la grosseur de grains est de l'ordre de quelques millimètres à quelques centimètres dans un four à cuve et le processus de transformation a lieu sous l'effet de HCl à des températures de 650 °C.

2. Procédé selon la revendication 1
**caractérisé en ce**
**qu'**on ajoute à la masse solide sèche une matière agglutinante anorganique, pour obtenir des granulés plus stables.

3. Procédé selon la revendication 1
**caractérisé en ce**
**qu'**on sépare dans des étapes de distillation suivantes les gaz de réaction trichlorosilane et tétrachlorure de silicium se produisant dans le réacteur, puis on les ramène au processus de production de silicium.

4. Procédé selon la revendication 1
**caractérisé en ce**
**que** dans un récipient de condensation, on sépare des gaz de réaction le chlorure de fer se produisant dans le réacteur.

5. Procédé selon la revendication 1
**caractérisé en ce**
**qu'**on prélève le SiC s'accumulant sur le fond du réacteur en tant que résidu solide et en fonction de la grosseur de grains, on l'amène à différentes utilisations.
